(19)

**Europäisches Patentamt**
**European Patent Office**
**Office européen des brevets**

(11) **EP 1 452 065 B1**

(12) **EUROPEAN PATENT SPECIFICATION**

(45) Date of publication and mention
of the grant of the patent:
**07.10.2009 Bulletin 2009/41**

(51) Int Cl.:
***H04W 72/08*** (2009.01)   ***H04L 1/00*** (2006.01)

(21) Application number: **02804372.7**

(22) Date of filing: **05.12.2002**

(86) International application number:
**PCT/SE2002/002234**

(87) International publication number:
**WO 2003/049485 (12.06.2003 Gazette 2003/24)**

(54) **A METHOD AND ARRANGEMENT FOR ALLOCATION THE QUANTITY OF A CHANNEL TO A MOBILE STATION AS A FUNCTION OF THE MEASURED QUALITY**

VERFAHREN UND ANORDNUNG ZUR ZUTEILUNG DER GRÖSSE EINES KANALS ZU EINER MOBILSTATION ALS FUNKTION DER GEMESSENEN QUALITÄT

PROCEDE ET DISPOSITIF D'ATTRIBUTION DU DEBIT D'UN CANAL A UNE STATION MOBILE EN FONCTION DE LA QUALITE MESUREE

(84) Designated Contracting States:
**AT BE BG CH CY CZ DE DK EE ES FI FR GB GR IE IT LI LU MC NL PT SE SI SK TR**

(30) Priority: **06.12.2001   SE 0104180**

(43) Date of publication of application:
**01.09.2004   Bulletin 2004/36**

(73) Proprietor: **TELEFONAKTIEBOLAGET LM ERICSSON (publ)**
**164 83 Stockholm (SE)**

(72) Inventors:
 • **SIMONSSON, Arne**
  **S-954 33 Gammelstad (SE)**
 • **ALMGREN, Magnus**
  **S-191 43 Sollentuna (SE)**

(74) Representative: **Holmberg, Nils Anders Patrik et al**
**BRANN AB**
**Västgötagatan 2**
**P.O. Box 17192**
**104 62 Stockholm (SE)**

(56) References cited:
**EP-A1- 1 122 965        EP-A2- 0 779 755**
**DE-A1- 19 922 170        US-B1- 6 181 686**

• **SIMONSSON A. ET AL.: 'A power control and scheduling concept for EGPRS' VEHIC TECHNOLOGY CONFERENCE vol. 5, 24 September 2000 - 28 September 2000, BOSTON, MA, USA, pages 2219 - 2224, XP002902207**

**Description**

**FIELD OF INVENTION**

The present invention relates to a method and arrangement in a wireless communication system, such as a cellular communication system, which includes radio communication stations. More particularly, the present invention relates to a method and arrangement for better usage of available radio resources in wireless communication systems.

**DESCRIPTION OF RELATED APT**

Current digital cellular systems, such as CDMA (Code Divisional Multiple Access) and WCDMA (Wideband Code Divisional Multiple Access) systems, employ logical base stations, which separate the communications with mobile stations using time, frequency or code separation, or combinations thereof. Three main resources are managed in a radio access system using CDMA technology:

- Interference in uplink, wherein uplink is the transmission of signals from a mobile station to a logical base station.

- Power.

- OVSF (Orthogonal Variable Spreading Factor) codes in downlink, wherein downlink is the transmission of signals from a logical base station to a mobile station. The use of OVSF codes preserve orthogonality between downlink physical channels.

In order to minimize interference between communicators using a radio communication system, the power levels of the radio signals may be regulated. For example, interference between different call connections using the same radio channel in a mobile radiotelephone system might be reduced by regulating the transmission power levels of the mobile stations and base stations. The goal is to ensure that only the transmission power necessary to maintain satisfactory call quality is used so that the likelihood of interference between calls using the same radio channel is reduced.

In existing systems, each cell is designed so that a minimal Signal-to-Interference Ratio (SIR) may be obtained in, for example, approximately 90% of the cell under normal traffic conditions. Without transmission power regulation, most of the calls in the center of each cell have a much better SIR value than necessary and may cause calls at the peripheries of other cells to use higher transmission power levels in order for those calls to be heard clearly. In other words, the calls in the center of the cells create more interference than necessary without transmission power regulation.

Another advantage of power regulation for cellular telephone systems is that system capacity can be increased by approximately 70% compared to an unregulated system, assuming that SIR is the same for all calls. Another reason to maintain the power at the lowest possible level is to reduce the energy consumed by the mobile station. Accordingly, the batteries used in power portable mobile stations can have a smaller capacity with the result that the portable mobile stations can be made smaller.

However, in practice it is difficult to obtain optimal power regulation, as the disturbance level varies considerably with both time and distance/positions of the transmitting and receiving parties.

As described in J. Zander, "Optimum Power Control in cellular Radio Systems", KTH, report No. TRITTA-TTT-9101 (January 1991), for every traffic scenario in a cellular system, there exists a maximum SIR ratio that can be obtained by all calls, so that all calls have this same SIR ratio. In a power regulating scheme, it is desirable to regulate power in order to obtain said maximum SIR value, but in practice it is difficult to determine the value to be targeted. If the value is set too high or too low, the powers of all regulated transmitters will be either increased to maximum levels or decreased to minimum levels, determined by the physical limits of the system. This phenomenon is in this disclosure called the "party effect".

The party effect is one of the problems that have been found when attempting to achieve a constant SIR ratio over an entire cell. For example, if two cells in different cell clusters use the same frequencies and have minimum allowed power levels that the mobiles in the respective cells can aim at and maximum power levels that those mobiles can not transmit above, this results in an unstable system. Mobiles located in a first cell raise their transmission power levels to overcome the co-channel interference caused by mobiles in the second cell and thus reach the constant SIR ratio. Similarly, the mobiles in the second cell raise their transmission power levels to overcome the now-increased co-channel interference from the mobiles in the first cell. Again, the mobiles in the first cell then adjust their power transmission levels upwards. This effect continues until all mobiles in the first and second cells are transmitting at their maximum levels, resulting in no improvement in interference problems, as well as power consumption problems with battery-operated mobiles.

Recently, packet data have been introduced into mobile communication systems. Most packet data applications can be used with and utilize different available bandwidth, i.e. they are "elastic". Packet data applications can function at a lower bit rate, but packet data applications are perceived as better at a higher bit rate. In order to optimize radio resources, the available bandwidth should be utilized. Furthermore, packet data applications are rater insensitive for delay variations.

Mobile communications system are emerging from channel limited toward interference limited. Today, there is more available channel and transceiver capacity than frequency spectrum. Utilizing full transceiver capacity will not always result in highest total throughput, i.e. maximum network capacity.

It is desirable to utilize the capacity of the spectrum without overloading the radio network, which may result in the fact that many users are temporary rejected from the system. It is preferable to have a smoother degradation of all users rather than blocking out a selected number of users.

The patent document US 5,446,735 filed December 18 1992 by Tobagi et al., discloses a method for allocating bandwidth in a shared transmission channel between a network interface device, e.g. a port in a switching hub, a bridge, or a router, and one or more mobile stations employing a technique known as Carrier Sense Multiple Access with Collision Detection (CSMA/CD). The CSMA/CD technology will be disclosed in more detail below. In the network interface device, a variable is maintained that stores information relating to success or failure of transmission packets in the channel. If the channel is sensed idle, the network interface device transmits the packet with probability 1. If the channel is sensed busy, the network interface device senses the channel for an end-of-carrier signal and, thereafter waits a time period equal to the interference gap. In additional, after an additional delay period, the network interface device make a new attempt to transmit the packet in the channel. I.e. US 5,446,735 discloses algorithms for performing a new transmission when there is interference.

However, such algorithms are useless when the user who has stated a transmission keeps the channel permanently occupied.

It should be noted that the CSMA/CD protocol has been devised for networks comprising a plurality of stations having two main objectives:

(i) to provide fair access to all mobile stations connected to the network, and

(ii) to adapt to the load and to avoid a high rate of repeated collisions by increasing the period of time over which packets are rescheduled.

Here, the operation of the exponential back-off algorithm will be disclosed in more details. Consider a case, where a packet is to be transmitted from a first mobile station suffers its second consecutive collision at a time instant t2. According to the exponential back-off algorithm, this packet will be scheduled for retransmission at time instant t2 + k, where k is an integer randomly chosen from the range [0,1,2,3]. If, for example the integer k is chosen to be equal 2 or 3, then several slots will be open for other mobile stations to transmit one or more packets on the network. Thus, the exponential back-off algorithm automatically provides some bandwidth for other logical base stations or network interface devices.

From DE 19 922 170 A1 is known a method to allocate channel quantity as a function of measured channel quality.

In the patent document US-A-5,5574982 filed May 14, 1993 by Magnus Almgren et. al. is disclosed a method for stable regulation of transmission power level in a radio system using the signal-to-interference ratio of the communication channel. However, power control is not always possible to use and sometimes power control is not most spectrum efficient. E.g. systems according to the EGPRS (Enhanced General Packet Radio Service) standard have limitations related to power control.

The problems that the present invention intends to solve are the following:

Power control is not always possible to use and sometimes power control is not spectrum efficient.

Admission control of mobile stations seeking to communicate does not degrade the quality equally for all users and does not take advantage of the elastic properties of packet data applications.

Transmission collision can not be detected on all types of radio access systems such as UMTS (Universal Mobile Telephone Systems) and GPRS system. To wait before retry does not control load after once getting access to the channel.

## SUMMARY OF THE INVENTION

The invention relates to scheduling for wireless communication systems such as in particular (E)GPRS, WCDMA and WLAN and the technique described in the invention intends to control the party effects by a user rate based scheduling back-off, i.e. not using every available channel in the cell. The scheduling back off method according to the invention is based on providing and controlling the number of channels/frequencies/codes/timeslots or fractions of channel use to a terminal depending on information regarding radio channel quality obtained from the system, for example from the terminals connected for downlink quality. It is however equally applicable for uplink control. In that case, information regarding quality is obtained from the base stations. As regards fractions of channel use, when transmitting packet data, several users share the same channel (frequency/code), wherein the channel is allocated in time. In that case the allocation in time may be extended so that some time periods are left unused, i e fractions of channels are provided and controlled.

The quantity of channels allocated to a user/mobile may be controlled dependent on different functions and based on different measurements such as channel rate, one or more channel quality measurements such as C/I (Carrier-to-Interference ratio), signal strength, BER (Bit Error Rate), BEP (Bit Error Probability) , FER (Frame Error Rate) and used power. One or more of these measurements may be used and combined for the scheduling according to the invention.

According to one aspect the available channels are fractionally loaded, wherein for a good radio channel a high fractional load is allowed and the worse the channel quality the lower the fraction. The method according to the invention may be utilized together with or instead of power control. An optimal back-off scheduling factor $\beta$ that maximizes user rate fairness with minimum system rate loss is used.

An advantage with the present method is that it increases user fairness in access to all users connected as regards power and frequency availability and to utilize the capacity of the system without overloading the network, thereby adjusting and adapting the quality for all current users according to the present load on the network. For example elastic applications such as TCP-applications will be treated more evenly. The method according to the invention also minimizes the risk for the party effect, and may be used in systems where power control is not possible or is not the most efficient way to control the radio traffic.

A further advantage with the invention is that it provides improved spectrum efficiency for tight frequency reuse networks such as 1-reuse EDGE, W-LAN and UMTS.

Yet an advantage with the invention is that it enables each cell/logical base station to function independently and without network functions in the radio Network Controller. Network functions are complex, both as algorithms and products.

Scheduling back-off is more efficient when interference is a more important limiting factor than the amount of available channels.

According to yet another aspect of the invention power and scheduling may be combined for certain applications. That is to apply a power control and use the resulting power as one of the channel quality measures.

The present invention is particularly suitable and efficient in a system provided with more channels/frequencies/ codes in a cell than necessary for obtaining an efficient usage of radio resources.

The term "comprises/comprising" when used in this specification is taken to specify the presence of stated features, integers, steps or components but does not preclude the presence or addition of one or more other features, integers, steps, components or groups thereof.

Further scope of applicability of the present invention will become apparent from the detailed description given hereinafter- However, it should be understood that the detailed description and specific examples, while indicating preferred embodiments of the invention, are given by way of illustration only, since various changes and modifications within the scope of the invention will become apparent to those skilled in the art from this detailed description.

**BRIEF DESCRIPTION OF THE DRAWINGS**

Figure 1    is a schematic view of the basic layout of a cellular communication system.
Figure 2    is a block diagram illustrating the usage of downlink scheduling back-off.
Figure 3    is a diagram illustrating an example of user rate CDF for different scheduling factors $\beta$ according to the invention.
Figure 4    is a diagram illustrating channel utilization as a function of back-off scheduling factor $\beta$.
Figure 5    is a diagram illustrating user rate percentiles as a function of back-off scheduling factor $\beta$.
Figure 6    is a diagram illustrating two different back-off functions according to the invention together with a desired channel use.
Figure 7    is a diagram illustrating two different back-off scheduling algorithms and one example of combined scheduling back-off and power control according to the invention.

The invention will now be described in more detail with reference to preferred exemplifying embodiments thereof and also with reference to the accompanying drawings.

**DETAILED DESCRIPTION**

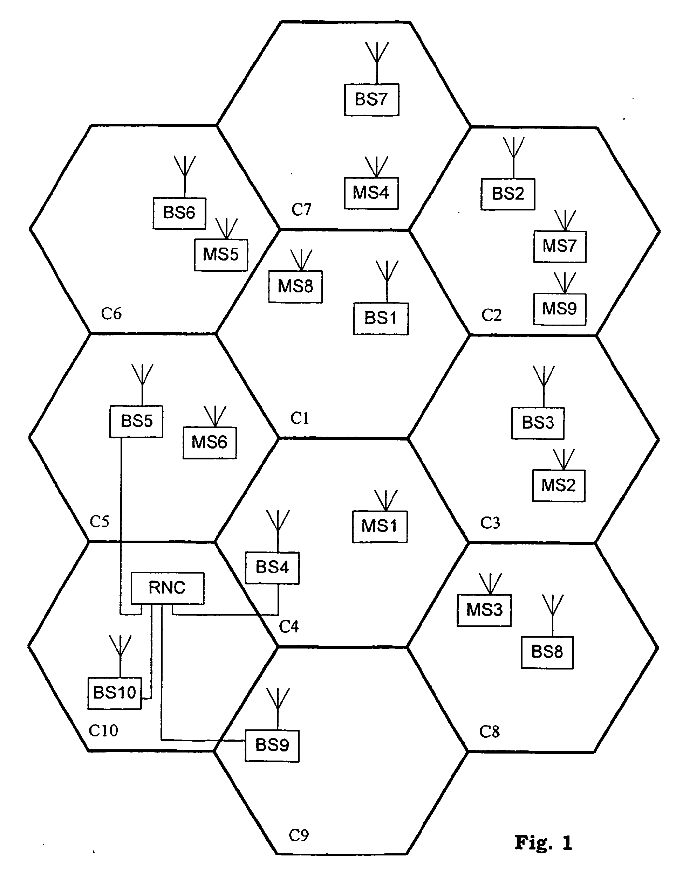

Fig. 1 illustrates ten cells C1-C10 in a typical cellular mobile radio communication CDMA-system as one example of a wireless communication system in which the present invention may be utilized. Normally a cellular mobile radio communication system would be implemented with more than ten cells. Each cell, C1-C10, is related to a logical base station, BS1-BS10 respectively, called Node B in the 3GPP standard specification. A logical base station can support FDD (Frequency Division Duplex) mode, TDD (Time Division Duplex) mode or dual-mode operation. Fig. 1 also illustrates nine mobile stations MS1-MS9 which are movable within the cells and from one cell to another. In this disclosure, a mobile station is defined as any mobile station, e.g. a mobile phone or a mobile computer provided with equipment for wireless communication. In a typical cellular mobile radio communication system there would normally be more logical base stations and mobile stations. In fact, there is typically many times the number of mobile stations as there are logical base stations.

Also illustrated in fig. 1 is a radio network controller RNC. The RNC illustrated in fig. 1 is connected to all logical base stations BS1-BS10 by cables or trunk lines, only a few of the cables being shown in the figure. The interface between a RNC and a logical base station is also called Iub interface. The radio network controller RNC is connected to the Core Network CN through an Iu interface. The Iu interface is not shown. The RNC selects the cell, which is to be inserted in the active set of a mobile station. The active set is the set of cells connected simultaneously to a given mobile station. A Core Network is the network connected to a set of RNC, e.g. a fixed network or a radio network belonging to a competing operator.

In addition to the radio network controller RNC illustrated in fig. 1, there may be other RNCs connected by cables or fixed radio links to the logical base stations, called Iub interface. The radio network controller RNC, the logical base stations, and the mobile stations are all computer-controlled. Each RNC is responsible for the resources in its set of logical base stations. Two or more RNCs may be connected to by means of an Iur interface. An Iur interface can be conveyed over direct physical connection between two or more RNCs or virtual networks using any suitable transport network. An Iur interface is an interface, which allows soft handover between RNCs marketed by different manufacturers. Iu and Iur are logical interfaces.

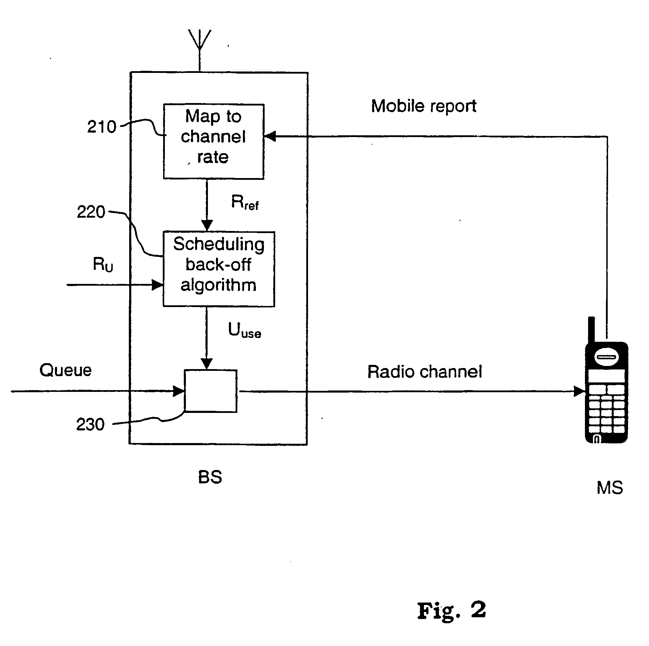

Fig. 2 illustrates a system using a method for scheduling back-off for transmission downlink according to the present invention. In Fig. 2 is shown a logical base station BS and a mobile station MS. The logical base station comprises three blocks, a block 210 wherein the measurement data are mapped to a channel rate, a block 220 comprising the back-off algorithm and block 230 where the amount of transmitted data to the mobile station is controlled. Packet data are sent from the logical base station BS to the mobile station MS. The mobile station performs an analyze of the quality of the received data. The result from the analyze is then transmitted as a report to block 210 in the logical base station BS. The report comprises a radio quality measure related to the quality of the downlink radio channel such as C/I (signal-to -interference ratio), BER (Bit Error Rate), FER (Frame Error rate) and/or BEP (Bit Error Probability). If one or more measurements are available they can be combined to improve the accuracy of the channel rate estimate. In block 210, the received radio quality measure Q is mapped to a channel rate $R_{ref}$ according to

$$R_{ref} = f(Q) \qquad eq. \ (1),$$

where $R_{ref}$ is the rate for a given channel, e.g. a time slot. For instance, if a half time slot is used having a rate of 10kbps, the channel rate $R_{ref}$ = 20kbps/timeslot.

As an alternative, the channel rate $R_{ref}$ can also be measured as achieved rate. Acknowledge messages can then be used to measure the achieved user rate of a mobile station. The user rate is related to the amount of channels/ percentage of a single channel a given mobile station is currently using. Then, the user rate may be mapped to the channel rate. The desired channel quantity that will be used if there is no back-off, i.e there is no channel limit, is

$$U_{des} = \frac{R_U}{R_{ref}} \qquad eq. \ (2)$$

where $R_U$ is the desired user rate. For example, if the desired user rate $R_U$ =15kbps, ¾ of a time slot is desired if the channel rate is 20kbps. As can be seen from equation 2, when the channel rate $R_{ref}$ is reduced, more channel quantity is desired. Since increased channel use results in increased interference, a reduced channel rate may result in a party effect. In order to prevent said party effect the amount of used channel must be limited.

A scheduling control algorithm having a partial compensation, in this disclosure called β-factor, of the desired back-off scheduling is shown to be a tool to control the party effect. The partial compensation results in that the more channel that is used, the lower is the aimed and achieved quality. A scheduling back-off function is used to limit the used channel:

$$U_{use} = g(R_U, R_{ref}) \quad eq. \ (3)$$

The worse the quality of the channel is, the more the function reduces the desired channel quantity. A man skilled in the art understands that the two functions eq. (1) and eq. (3) can be combined in order to obtain the used channel as a function of reported channel quality;

$$U_{use} = h(R_U, Q) \quad eq. \ (4)$$

In systems with power control the used power compensates the channel quality. For example in UMTS the fast power control fully compensates the channel quality by balancing the C/I. In that case the used power can be used as the quality measure (Q) in equation (4).

One example of the back-off function eq. (3) is an exponential back-off function;

$$U_{use} = \left(\frac{R_U}{R_{ref}}\right)^{\beta}, \quad eq. \ (5)$$

where the exponent P is between 0 and 1 (1 is equal to no back-off). A good choice for a cellular system is

$$\beta = \frac{B}{B + 20}, \quad eq. \ (6)$$

where B is the propagation constant according to the Okumara-Hata model. A complete definition of the Okumara-Hata model may be found for example in "Handbook of land-mobile radio system coverage" by Garry C. Hess, Artech House Publishers.

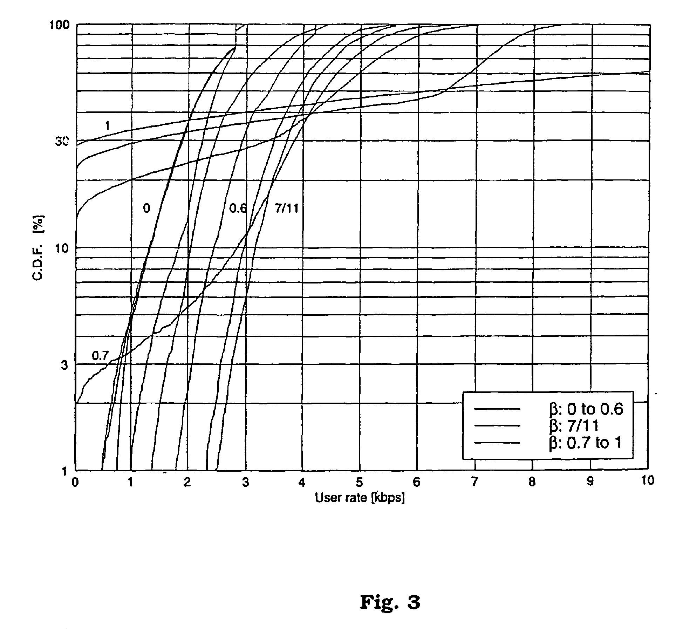

As an example, Fig. 3 is a diagram illustrating the user rate in kilobits per second (kbps) versus the back-off scheduling factor β. The diagram was obtained with radio networksimulations of an EDGE (Enhanced Data rates for GSM Evolution) system. Each base used 200 channels representing all RLC-blocks (Radio Link Control) during 1 second on 4 time slots. Only downlink was simulated. Each user utilized all resources (RLC-blocks and rate) it was allocated by the algorithms (100% loaded).

This behavior is similar to an overload system with packet data queues to all users where no user will be able to finish its transactions during the simulated second/snapshot. The following measurement and regulation loop was iterated each snapshot (second): 1) the RLC-blocks (channels) were allocated randomly to mobiles. The number of RLC-blocks $U_{use}$ to each mobile was controlled by the scheduling back-off algorithm; 2) the C/I was measured for each RLC-block. No fast fading was modeled so all RLC-blocks to a mobile had the same C, while I differed because of the random RLC-block allocation; 3)the C/I (dB) was mapped to an RLC-block rate (kbit/block). The average RLC-block rate was calculated and used as $R_{RLC}$ in the scheduling back-off algorithm. After 20 iterations the resulting user rate was measured as the sum of all RLC-block rates for each user. To avoid reaching the channel limitation before the interference limit a 1 reuse frequency plan was used (all available frequencies are used in every cell). 100% 1-reuse is simulated since this is the scenario where EDGE is not channel limited and scheduling back-off is superior to power control. The term 1-reuse is defined as all available frequencies in every cell are used. The term 100% loaded is defined as every available frequency is used for transmission.

The desired user rate, $R_u$, was set to 10 kbps/user. The resulting user rate CDF's (Cumulative Density Function) are shown in Fig. 3.

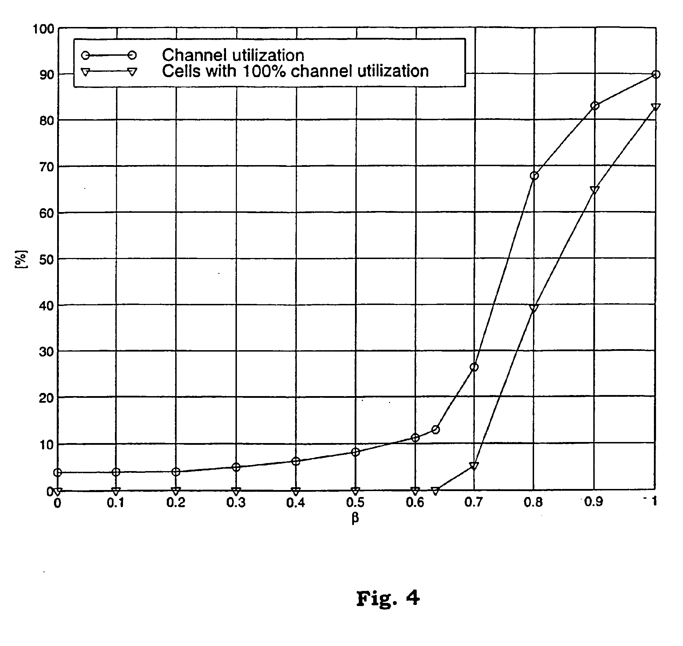

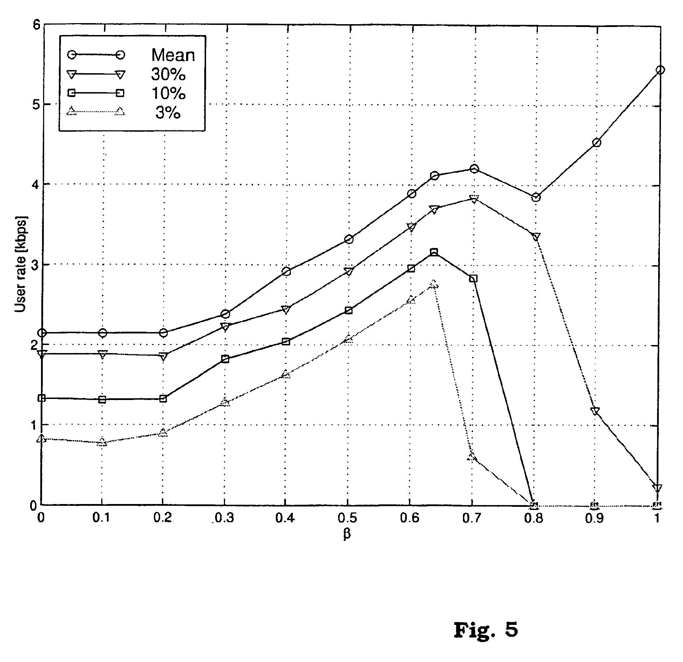

As seen, for an increased $\beta$ more channel is allocated to each mobile to reach the desired rate of 10 kbps resulting in increased achieved user rate. For a $\beta$ of 0,6 or less all mobiles will gain by an increased $\beta$. For a $\beta$ of 0,7 or more some mobiles will be degraded, which degradation is caused by increased channel utilization creating more degradation. The channel utilization increase is shown in Fig. 4, where it is shown that the channel utilization increases strongly for a $\beta$ larger than 0,7. The user rate percentile values are shown in Fig. 5.

As can be seen from the example, the fairness improvement is considerable. The grade of users served with 3,2 kbps is increased from 56% to 89% by a scheduling back-off according to the invention with a $\beta$ of 7/11, i.e. the propagation constant B=35.

Another example of a back-off function according to eq. (3) is an interference energy back-off:

$$R_{ref} = \frac{R_U - 10 \cdot \log U_{use}}{U_{use}} \qquad \text{eq. (7).}$$

In this case, $U_{use}$ is solved numerically for a given channel rate. However, this is not a significant implementation problem as tables can be used.

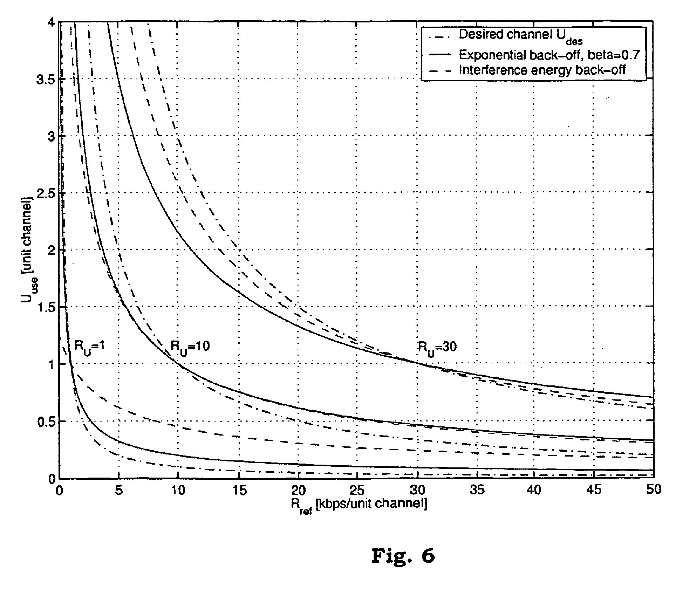

Fig. 6 is a diagram illustrating $U_{use}$ versus $R_{ref}$ for the two back-off functions eq. (5) and eq. (7) together with the desired channel used $U_{des}$.

According to the invention power and scheduling may be combined for certain applications. That is to apply a power control and use the resulting power as one of the channel quality measures Q in equation 1. One example is to apply a fully compensating power control (no beta-factor) aiming for a certain C/I target. The power then reflects the link quality well and can be used as the only measurement. Since the power is fully compensating, the party effect must be prevented with scheduling back-off. The interference energy back-off can be modified to take into account the used power:

$$P = \frac{R_U - 10 \log U_{use} - U_{use} R_{ref}}{20/B} \qquad \text{eq. (8).}$$

$R_{ref}$ is in this case not measured but a constant, that is the channel rate achieved with the C/I target used in the power control.

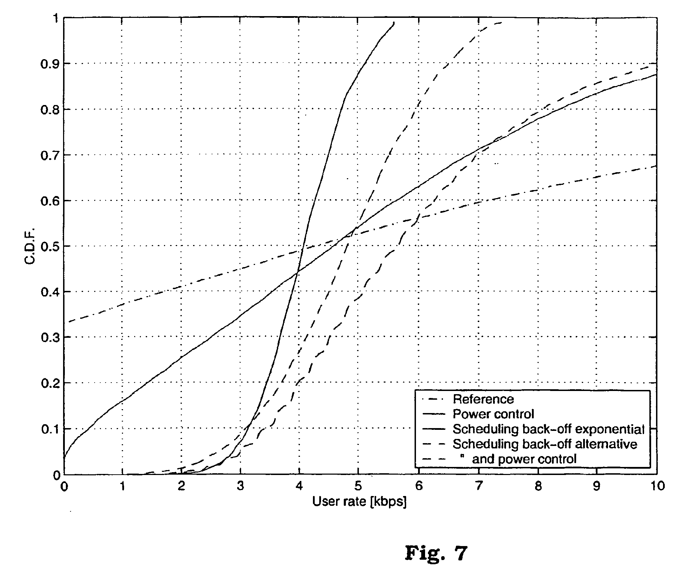

In fig. 7, two examples of scheduling back-off functions and one example of combined scheduling back-off and power control are compared with power control. The results are from simulations according to those mentioned above. For EDGE a good choice for C/I target is 7.5 dB, which by the inventors is found to be optimal from a spectrum efficiency point of view. This target is used in the power control algorithm. The present invention may be implemented in a wireless communication system in many ways known to the man skilled in the art, as software and as hardware. If software is utilized, the present invention may be stored in a suitable computer-readable media such as RAM, ROM, EPROM, flash-memory, hard-disk drives, opto-mechanical storage means and the like, which memory means are accessible to a CPU for performing the present invention. These measures are well known for a man skilled in the art and will not be explained in detail herein.

The embodiment described has been focused on controlling downlink channel usage, ie. from base station to mobile in a cellular system. However, it is to be understood by the man skilled in the art that the present invention is equally applicable, and suitable, for controlling uplink in a cellular system because the algorithm described is local and does not require network knowledge or control, In such a case, the algorithm may be implemented in a mobile terminal. A further applicable technical area where the algorithm may be implemented in the mobile terminal is ad hoc networks, such as for example WLAN.

The invention being thus described, it will be obvious that the same may be varied in many ways. Such variations are not to be regarded as a departure from the scope of the invention, and all such modifications as would be obvious to one skilled in the art are intended to be included within the scope of the following claims.

**Claims**

1. A method of allocating channel to a mobile station in a radio communication system having at least one logical base station and at least one mobile station, the method comprising the steps of:

   - measuring the quality of the channel used by said at least one mobile station, wherein the quantity of channel allocated to the at least one mobile station is controlled as a function of the measured channel quality, **characterized in that** the channel rate of said channel used by said at least one mobile station is estimated or measured and a quantity $U_{use}$ of channel allocated to said at least one mobile station is determined as a back-off function of said estimated or measured channel rate, wherein $U_{use} = \left( \dfrac{R_U}{R_{ref}} \right)^{\beta}$ , $R_U$ being a desired/target user rate, Rref being estimated or measured channel rate, and $\beta$ being a scheduling control exponent, $0<\beta<1$.

2. A method according to claim 1, wherein the signal to interference ratio is measured and used to estimate Rref.

3. A method according to claim 1, wherein the signal strength is measured and used to estimate Rref.

4. A method according to claim 1, wherein the Bit-error-probability (BEP) is measured and used to estimate Rref.

5. A method according to claim 1, wherein the Bit-Error-Ratio (BER) is measured and used to estimate Rref.

6. A method according to claim 1, wherein the Frame-Error-Ratio (FER) is measured and used to estimate Rref.

7. A method according to claim 1, wherein the exponent $\beta$ is set as a function of expected environment propagation constant according to $\beta = \dfrac{B}{B + 20}$ , wherein $B$ is the propagation constant according to the Okumara-Hata model.

8. A method according to claim 1, wherein the exponent $\beta$ is set to 0,7.

9. A method according to any of the preceding claims, wherein the method is combined with power control algorithms.

10. A device adapted to be used in a system for allocating channel to a mobile station in a radio communication system having at least one logical base station and at least one mobile station, said device comprising :

    - means for transmitting data to said at least one mobile station,
    - means (210) for receiving information regarding the quality of the channel used by said at least one mobile station, and
    - means (220, 230) for controlling the quantity $U_{use}$ of channel allocated to the at least one mobile station as a function of the measured channel quality, **characterized in that** said quantity of channel allocated is determined and controlled in accordance with claim 1.

11. A system comprising at least one mobile station and a device according to claim 10 adapted to be used in the system for allocating channel to a mobile station in a radio communication system having at least one logical base station, said mobile station comprising:

    - means for receiving data transmitted from said at least one logical base station, and:
    - means for measuring and analyzing the quality of the received data, and
    - means for transmitting the quality analysis to said at least one logical base station, which analysis forms the basis for controlling the quantity of channel allocated, **characterized in that** the controlling of the quantity of channel allocated is performed by means of the back-off function according to claim 1.

12. A mobile station adapted to be used in a system for allocating channel to a mobile station in a radio communication system having at least one logical base station, said mobile station comprising:

- means for transmitting data to said at least one logical base station, and
- means for receiving information regarding the quality of channel used by said at least one mobile station, and
- means for controlling the quantity of channel allocated to the at least one mobile station as a function of the measured channel quality, **characterized in that** the quantity of channel allocated is determined and controlled according to claim 1.

13. A mobile station according to claim 12 or a mobile station comprised in a system according to claim 11, comprising means for measuring being adapted to perform measurements according to any of the claims 2 to 6.

14. A system comprising at least one mobile station according to claim 12 and a device adapted to be used in said system for allocating channel to a mobile station in a radio communication system having at least one logical base station and at least one mobile station, said device comprising

- means for receiving data transmitted from said at least one mobile station,
- means for measuring and analyzing the quality of the received data, and
- means for transmitting the quality analysis to said at least one mobile station, which analysis forms the basis for controlling the quantity of channel allocated, **characterized in that** the controlling of the quantity of channel allocated is performed by means of the back-off function according to claim 1.

15. A computer program product including software code means for performing the steps according to any of the claims 1-9 when run on a computer.

16. A computer program product according to claim 15, stored on a computer-readable carrier.

17. A computer program product according to claim 15, in the form of a signal.

**Patentansprüche**

1. Verfahren eines Allozierens eines Kanals zu einer Mobilstation in einem Funkkommunikationssystem mit zumindest einer logischen Basisstation und zumindest einer Mobilstation, wobei das Verfahren die Schritte umfasst:

- Messens der Qualität des Kanals, der von der zumindest einen Mobilstation verwendet wird, wobei die Menge an Kanal, die zu der zumindest einen Mobilstation alloziert wird, als eine Funktion der gemessenen Kanalqualität gesteuert wird,

**dadurch gekennzeichnet, dass** die Kanalrate des Kanals, der von der zumindest einen Mobilstation verwendet wird, geschätzt oder gemessen wird und eine Menge $U_{use}$ an Kanal, die zu der zumindest einen Mobilstation alloziert wird, als eine Zurückweichfunktion (Back-Off-Function) der geschätzten oder gemessenen Kanalrate bestimmt wird,

wobei $U_{use} = \left( \dfrac{R_U}{R_{Ref}} \right)^{\beta}$,

wobei $R_U$ eine gewünschte/Sollbenutzerrate ist, Rref eine geschätzte oder gemessene Kanalrate ist und $\beta$ ein Planungssteuerexponent $0<\beta<1$ ist.

2. Verfahren nach Anspruch 1, wobei das Signal-zu-Rauschverhältnis gemessen wird und verwendet wird, um Rref zu schätzen.

3. Verfahren nach Anspruch 1, wobei die Signalstärke gemessen wird und verwendet wird, um Rref zu schätzen.

4. Verfahren nach Anspruch 1, wobei die Bit-Fehler-Wahrscheinlichkeit (Bit-Error-Probability - BEP) gemessen wird und verwendet wird, um Rref zu schätzen.

5. Verfahren nach Anspruch 1, wobei das Bit-Fehler-Verhältnis (Bit-Error-Ratio - BER) gemessen wird und verwendet wird, um Rref zu schätzen.

**6.** Verfahren nach Anspruch 1, wobei das Rahmen-Fehler-Verhältnis (Frame-Error-Ratio - FER) gemessen wird und verwendet wird, um Rref zu schätzen.

**7.** Verfahren nach Anspruch 1, wobei der Exponent β als eine Funktion einer erwarteten Umgebungsausbreitungs-konstante gemäß $\beta = \dfrac{B}{B+20}$ gesetzt wird, wobei B die Ausbreitungskonstante gemäß dem Okumara-Hata-Modell ist.

**8.** Verfahren nach Anspruch 1, wobei der Exponent β auf 0,7 gesetzt wird.

**9.** Verfahren nach einem der vorangehenden Ansprüche, wobei das Verfahren mit Leistungssteueralgorithmen kombiniert wird.

**10.** Gerät, das angepasst ist, in einem System zum Allozieren eines Kanals zu einer Mobilstation in einem Funkkommunisationssystem mit zumindest einer logischen Basisstation und zumindest einer Mobilstation verwendet zu werden, wobei das Gerät umfasst:

- eine Vorrichtung zum Übertragen von Daten an die zumindest eine Mobilstation,
- eine Vorrichtung (210) zum Empfangen von Information hinsichtlich der Qualität des Kanals, der von der zumindest einen Mobilstation verwendet wird, und
- eine Vorrichtung (220, 230) zum Steuern der Menge $U_{use}$ an Kanal, der zu der zumindest einen Mobilstation alloziert ist, als eine Funktion der gemessenen Kanalqualität, **dadurch gekennzeichnet, dass** die Menge eines allozierten Kanals gemäß Anspruch 1 bestimmt und gesteuert wird.

**11.** System mit zumindest einer Mobilstation und einem Gerät nach Anspruch 10, das angepasst ist, in dem System zum Allozieren eines Kanals zu einer Mobilstation in einem Funkkommunikationssystem mit zumindest einer logischen Basisstation verwendet zu werden, wobei die Mobilstation umfasst:

- eine Vorrichtung zum Empfangen von Daten, die von der zumindest einen logischen Basisstation übertragen werden, und:
- eine Vorrichtung zum Messen und Analysieren der Qualität der empfangenen Daten, und
- eine Vorrichtung zum Übertragen der Qualitätsanalyse an die zumindest eine logische Basisstation, wobei die Analyse die Basis zum Steuern der Menge eines allozierten Kanals bildet, **dadurch gekennzeichnet, dass** das Steuern der Menge eines allozierten Kanals mittels der Zurückweisungsfunktion (Back-Off-Function) gemäß Anspruch 1 durchgeführt wird.

**12.** Mobilstation, die angepasst ist, in einem System zum Allozieren eines Kanals zu einer Mobilstation in einem Funkkommunikationssystem mit zumindest einer logischen Basisstation verwendet zu werden, wobei die Mobilstation umfasst:

- eine Vorrichtung zum Übertragen von Daten zu der zumindest einen logischen Basisstation, und
- eine Vorrichtung zum Empfangen von Information hinsichtlich der Qualität eines Kanals, der von der zumindest einen Mobilstation verwendet wird, und
- eine Vorrichtung zum Steuern der Menge eines Kanals, der zu der zumindest einen Mobilstation alloziert ist, als eine Funktion der gemessenen Kanalqualität, **dadurch gekennzeichnet, dass** die Menge eines allozierten Kanals gemäß Anspruch 1 bestimmt und gesteuert wird.

**13.** Mobilstation nach Anspruch 12 oder eine Mobilstation, die in einem System nach Anspruch 11 umfasst ist, mit einer Vorrichtung zum Messen, die angepasst ist, die Messungen nach einem der Ansprüche 2 bis 6 durchzuführen.

**14.** System mit zumindest einer Mobilstation nach Anspruch 12 und einem Gerät, das angepasst ist, in dem System zum Allozieren eines Kanals zu einer Mobilstation in einem Funkkommunikationssystem mit zumindest einer logischen Basisstation und zumindest einer Mobilstation verwendet zu werden, wobei das Gerät umfasst:

- eine Vorrichtung zum Empfangen von Daten, die von der zumindest einen Mobilstation übertragen werden,
- eine Vorrichtung zum Messen und Analysieren der Qualität der empfangenen Daten, und
- eine Vorrichtung zum Übertragen der Qualitätsanalyse an die zumindest eine Mobilstation, wobei die Analyse die Basis zum Steuern der Menge eines allozierten Kanals bildet, **dadurch gekennzeichnet, dass** das Steuern der Menge eines allozierten Kanals mittels der Zurückweisungsfunktion (Back-Off-Function) nach Anspruch 1 durchgeführt wird.

**15.** Computerprogrammprodukt einschließlich einer Softwarecodevorrichtung zum Durchführen der Schritte nach einem der Ansprüche 1 bis 9, wenn auf einem Computer laufengelassen.

**16.** Computerprogrammprodukt nach Anspruch 15, das auf einem Computer-lesbarem Träger gespeichert wird.

**17.** Computerprogrammprodukt nach Anspruch 15, in der Form eines Signals.

**Revendications**

**1.** Procédé d'attribution d'un canal à une station mobile dans un système de communication radio possédant au moins une station de base logique et au moins une station mobile, le procédé comprenant l'étape consistant à :

- mesurer la qualité du canal utilisé par ladite au moins une station mobile, la quantité de canal attribuée à ladite au moins une station mobile étant commandée en fonction de la qualité de canal mesurée ;

**caractérisé en ce que** le débit de canal dudit canal utilisé par ladite au moins une station mobile est estimé ou mesuré et une quantité $U_{use}$ de canal attribué à ladite au moins une station mobile est déterminée sous la forme d'une fonction de réduction de puissance dudit débit de canal estimé ou mesuré, où l'on a $U_{use} = (Ru / R_{ref})^{\beta}$, $R_U$ étant un débit d'utilisateur souhaité/de consigne, $R_{ref}$ étant le débit de canal estimé ou mesuré et $\beta$ étant un exposant de commande de l'ordonnancement, avec $0 < \beta < 1$.

**2.** Procédé selon la revendication 1, dans lequel le rapport signal sur interférences est mesuré et utilisé pour estimer $R_{ref}$.

**3.** Procédé selon la revendication 1, dans lequel l'intensité du signal est mesurée et utilisée pour estimer $R_{ref}$.

**4.** Procédé selon la revendication 1, dans lequel la probabilité d'erreurs sur bits (BEP pour « *Bit Error Probability* ») est mesurée et utilisée pour estimer $R_{ref}$.

**5.** Procédé selon la revendication 1, dans lequel le rapport d'erreur sur bits (BER pour « *Bit Error Ratio* ») est mesuré et utilisé pour estimer $R_{ref}$.

**6.** Procédé selon la revendication 1, dans lequel le rapport d'erreurs sur trames (FER pour « *Frame Error Ratio* ») est mesuré et utilisé pour estimer $R_{ref}$.

**7.** Procédé selon la revendication 1, dans lequel l'exposant $\beta$ est défini en fonction d'une constante de propagation dans l'environnement attendue, à raison de $\beta = \dfrac{B}{B + 20}$, $B$ étant la constante de propagation selon le modèle d'Okumara-Hata.

**8.** Procédé selon la revendication 1, dans lequel l'exposant $\beta$ est fixé à 0,7.

**9.** Procédé selon l'une quelconque des revendications précédentes, dans lequel le procédé est combiné à des algorithmes de commande de la puissance.

**10.** Dispositif conçu pour être utilisé dans un système destiné à attribuer un canal à une station mobile dans un système de communication radio possédant au moins une station de base logique et au moins une station mobile, ledit dispositif comprenant :

- un moyen destiné à émettre des données vers ladite au moins une station mobile ;
- un moyen (210) destiné à recevoir des informations concernant la qualité du canal utilisé par ladite au moins une station mobile ; et

- un moyen (220, 230) destiné à commander la quantité $U_{use}$ de canal attribuée à ladite au moins une station mobile en fonction de la qualité de canal mesurée ;

**caractérisé en ce que** ladite quantité de canal attribuée est déterminée et commandée selon la revendication 1.

11. Système comprenant au moins une station mobile et un dispositif selon la revendication 10, conçu pour être utilisé dans le système destiné à attribuer un canal à une station mobile dans un système de communication radio possédant au moins une station de base logique, ladite station mobile comprenant :

- un moyen destiné à recevoir des données émises à partir de ladite au moins une station de base logique ; et
- un moyen destiné à mesurer et analyser la qualité des données reçues ; et
- un moyen destiné à émettre l'analyse qualitative vers ladite au moins une station de base logique, ladite analyse constituant la base de la commande de la quantité de canal attribuée ;

**caractérisé en ce que** la commande de la quantité de canal attribuée est exécutée à l'aide de la fonction de réduction de puissance selon la revendication 1.

12. Station mobile conçue pour être utilisée dans un système destiné à attribuer un canal à une station mobile dans un système de communication radio possédant au moins une station de base logique, ladite station mobile comprenant :

- un moyen destiné à émettre des données vers ladite au moins une station de base logique ; et
- un moyen destiné à recevoir des informations concernant la qualité du canal utilisé par ladite au moins une station mobile ; et
- un moyen destiné à commander la quantité de canal attribuée à ladite au moins une station mobile en fonction de la qualité de canal mesurée ;

**caractérisé en ce que** la quantité de canal attribuée est déterminée et commandée selon la revendication 1.

13. Station mobile selon la revendication 12 ou station mobile comprise dans un système selon la revendication 11, comprenant un moyen de mesure conçu pour exécuter des mesures selon l'une quelconque des revendications 2 à 6.

14. Système comprenant au moins une station mobile selon la revendication 12 et dispositif conçu pour être utilisé dans ledit système afin d'attribuer un canal à une station mobile dans un système de communication radio possédant au moins une station de base logique et au moins une station mobile, ledit dispositif comprenant :

- un moyen destiné à recevoir des données émises à partir de ladite au moins une station mobile ;
- un moyen destiné à mesurer et analyser la qualité des données reçues ; et
- un moyen destiné à émettre l'analyse qualitative vers ladite au moins une station mobile, ladite analyse constituant la base de la commande de la quantité de canal attribuée ;

**caractérisé en ce que** la commande de la quantité de canal attribuée est exécutée à l'aide de la fonction de réduction de puissance selon la revendication 1.

15. Progiciel d'ordinateur comprenant des moyens de code logiciel destinés à exécuter les étapes selon l'une quelconque des revendications 1 à 9 lorsqu'ils sont exécutés sur un ordinateur.

16. Progiciel d'ordinateur selon la revendication 15, stocké sur un support lisible par ordinateur.

17. Progiciel d'ordinateur selon la revendication 15, sous la forme d'un signal.

**Fig. 1**

210 — **Map to channel rate**

$R_{ref}$

220 — **Scheduling back-off algorithm**

$R_U$

$U_{use}$

Queue

230 —

**BS**

Mobile report

Radio channel

**MS**

**Fig. 2**

**Fig. 3**

15

**Fig. 4**

**Fig. 5**

**Fig. 6**

**Fig. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5446735 A, Tobagi
- DE 19922170 A1
- US 55574982 A

**Non-patent literature cited in the description**

- **J. Zander.** Optimum Power Control in cellular Radio Systems. *KTH, report No. TRITTA-TTT-9101,* January 1991
- **Garry C. Hess.** Handbook of land-mobile radio system coverage. Artech House Publishers